# EUROPEAN PATENT SPECIFICATION

(11) **EP 0 567 695 B1**
(45) Date of publication and mention of the grant of the patent: **17.01.1996**
(21) Application number: 92303803.8
(22) Date of filing: 28.04.1992
(51) Int. Cl.: H02P 7/285

(54) **Direct current motor driving device**
Gleichstrommotorantriebsvorrichtung
Dispositif d'entraînement pour moteur à courant continu

(43) Date of publication of application: 03.11.1993
(73) Proprietor: KABUSHIKI KAISHA SEGA ENTERPRISES, Tokyo 144 (JP); Oda, Nobuo, Tokyo 158 (JP)
(72) Inventor: Oda, Nobuo, Tokyo 158 (JP)
(74) Representative: SERJEANTS

(56) References cited:
- DE-A- 2 023 327
- GB-A- 2 046 602
- PATENT ABSTRACTS OF JAPAN vol. 9, no. 332 (E-370)(2055) 26 December 1985 & JP-A-60 162 494

## Description

### BACKGROUND OF THE INVENTION

The present invention relates to a direct current motor driving device, specifically a direct current motor driving device for driving a small-sized direct current motor to be built in toys and so on.

Conventionally small-sized direct current motors having cells as the electric sources have been dominantly used in toys, such as cars. Usually toys having direct current motors built in have power switches between the sources and the direct current motors for turning on and off the direct current motors. When the toys are used, the power switches are turned on to supply electric power to the direct current motors, and when the toys are stopped, the power switches are turned off to stop the supply of the electric power to the direct current motors.

As the conventional direct current motors which can be actuated and stopped without the use of power switches are known double-pole direct current motors having a special structure having a wider gap between the commutator, segments of the commutators for non conductive point with conductive brushes (see GB-A-2 046 602). The double-pole direct current motor of this type makes use of the fact that with a gap between the commutator segments made wider, when the motor is rotated at high speed, the rotation is retained due to an inertia, but when the motor is rotated at low speed, the commutator segments come out of contact with the conductive brushes, and the motor is stopped. When this direct current motor is actuated, the motor is rotated at high speed by an external force and is set on the rotation. When the motor is stopped, a large load is applied to the motor, and the motor is stopped.

But this switchless direct current motor has the problem that because this motor can not be actuated unless rotated at high speed, its actuation is difficult. Another problem is that because this motor has the special structure that the gap between the segments of the commutator is wider, the output torque is small, and the current consumption is large with the result of low driving efficiency.

### SUMMARY OF THE INVENTION

An object of the present invention is to provide a direct current motor driving device which enables direct current motors for general-purposes to be actuated and stopped without the necessity of the conventional special motor structure and without the use of power switches.

Another object of the present invention is to provide mobile toys having direct current motors for general-purposes which can be actuated and stopped by operating the mobile toys by external forces and without the use of power switches.

The above-described objects can be achieved by a direct current motor driving device for driving a direct current motor having a plus terminal and a minus terminal, the device comprising: a direct current source having a plus terminal and a minus terminal, the plus terminal being connected to the plus terminal of the direct current motor; pulse generating means for generating a pulse signal when an input signal to an input terminal of the pulse generating means exceeds a set threshold value; driving means for driving the direct current motor in response to the pulse signal cutputted by the pulse generating means; and a first resistance type voltage dividing circuit inserted between the minus terminal of the direct current source and a minus terminal of the direct current motor for providing as the input signal to the pulse generating means a voltage signal produced by resistance-dividing a voltage between these terminals in a first ratio, whereby when a counter electromotive force generated by the direct current motor by the rotation of the direct current motor by an external force in a direction opposite to its driving rotational direction is added to a source voltage of the direct current source to be supplied to the first resistance type voltage dividing means, the voltage signal of the first resistance type voltage dividing means is increased to exceed the set threshold value of the pulse generating means, and the pulse signal is generated by the pulse generating means to actuate the direct current motor.

The above-described objects can be achieved by a mobile toy comprising: a mobile toy body; running wheels for running the mobile toy body in a required direction; a direct current motor having a plus terminal and a minus terminal for rotating the running wheels; and a direct current motor driving device including a direct current source having a plus terminal and a minus terminal, the plus terminal being connected to the plus terminal of the direct current motor; pulse generating means for generating a pulse signal when an input signal to an input terminal thereof exceeds a set threshold value; driving means for driving the direct current motor in response to the pulse signal from the pulse generating means; and a first resistance type voltage dividing circuit inserted between the minus terminal of the direct current source and the minus terminal of the direct current motor for providing as the input signal to the pulse generating means a voltage signal produced by resistance-dividing avoltage between these terminals in a first ratio, whereby when a counter electromotive force generated by the direct current motor by running the mobile toy body in a direction opposite to its running direction by an external force is added to a source voltage to be supplied to the first resistance type voltage dividing circuit, the voltage signal of the first resistance type voltage dividing circuit is increased to exceed the set threshold value of the pulse generating means, and the pulse signal is generated by the pulse generating means to actuate the direct current motor and rotate the running wheels, and the mobile toy body runs in a running direction.

### BRIEF DESCRIPTION OF THE DRAWINGS

FIG. 1 is a block diagram of the direct current motor driving device according to a first embodiment of the present invention;
FIG. 2 is a circuit diagram of the direct current motor driving device according to the first embodiment of the present invention;
FIG. 3 is a block diagram of the direct current motor driving device according to a second embodiment of the present invention;
FIG. 4 is a circuit diagram of the direct current motor driving device according to the second embodiment of the present invention;
FIG. 5 is an appearance view of a toy car the direct current motor driving device according to the present invention is applied to; and
FIG. 6 is an appearance view of the toy car of FIG. 5 with the outer shell removed.

### DETAILED DESCRIPTION OF THE INVENTION

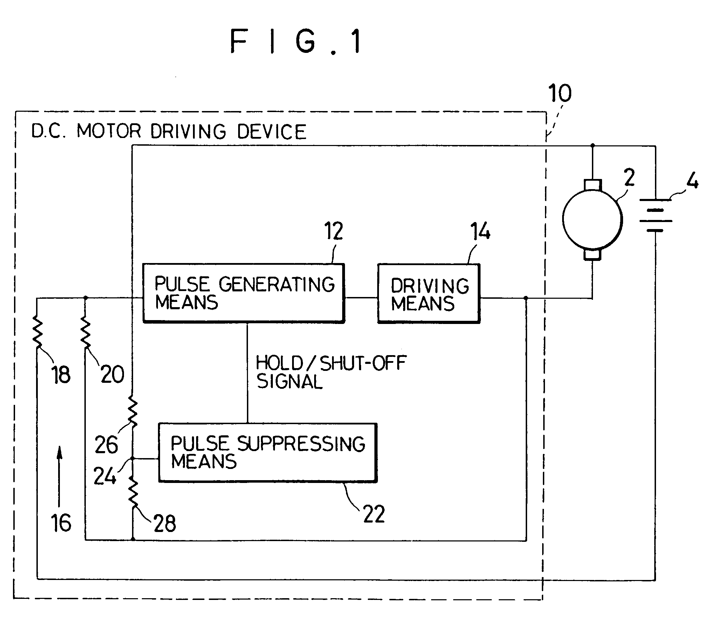

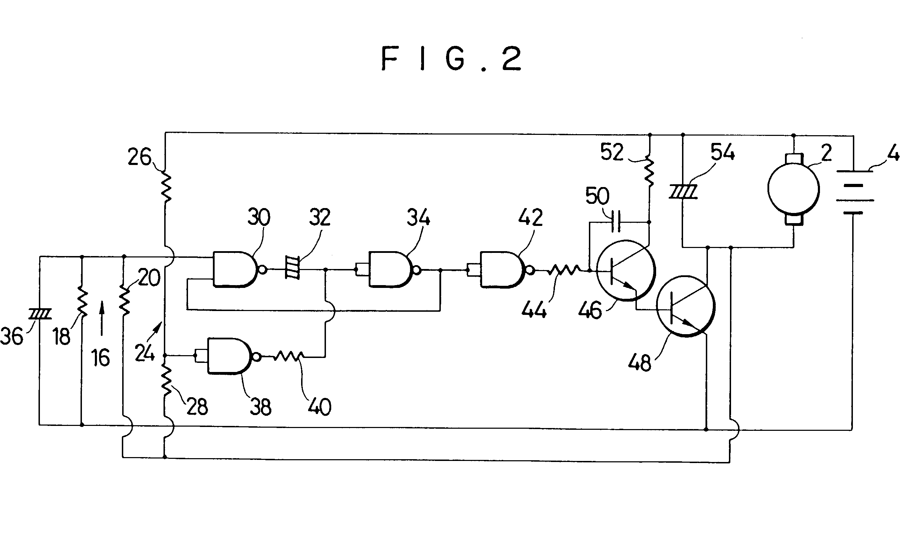

The direct current motor driving device according to a first embodiment of the present invention will be explained with reference to FIGs. 1 and 2. FIG. 1 is a block diagram of the direct current motor driving device, and FIG. 2 is a circuit diagram of the direct current motor driving device of FIG. 1.

In this embodiment, a three-pole direct current motor 2 for universal purposes will be driven. A direct current source 4 is provided to supply a power to the direct current motor 2. The plus terminal of the direct current motor 2 is connected to the plus terminal of the direct current source 4. A direct current motor driving device 10 is provided to drive the direct current motor 2.

The direct current motor driving device 10 comprises pulse generating means 12 for generating a pulse signal when an input signal exceeds a set threshold value, and driving means 14 for driving the direct current motor 2 in response to the pulse signal from the pulse generating means 12.

The direct current motor driving device 10 includes a resistance type voltage dividing circuit 16 inserted between the minus terminal of the direct current source 4 and the minus terminal of the direct current motor 2. The resistance type voltage dividing circuit 16 outputs a voltage signal produced by resistance-dividing a voltage between both terminals in a set ratio. The resistance type voltage dividing circuit 16 includes a resistor 18 inserted between the minus terminal of the direct current source 4 and an input terminal of the pulse generating means 12, and a resistor 20 inserted between the input terminal of the pulse generating means 12 and the minus terminal of the direct current motor 2. The values of the resistors 18, 20 are so set that the voltage signal produced by resistance-dividing a voltage by the resistance type voltage dividing circuit 16 is slightly below the threshold value of the input signal of the pulse generating means 12 with the direct current motor 2 stopped rotating.

The pulse generating means 12 includes pulse suppressing means 22 for suppressing the generation of the pulse signal by the pulse generating means 12 when an input signal to an input terminal exceeds a threshold value of the pulse suppressing means 22.

A resistance type voltage dividing circuit 24 is inserted between the plus terminal of the direct current source 4 and the minus terminal of the direct current motor 2. The resistance type voltage dividing circuit 24 outputs a voltage signal produced by resistance-dividing a voltage between both terminals in a set ratio. The resistance type voltage dividing circuit 24 comprises a resistor 26 inserted between the plus terminal of the direct current source 4 and the input terminal of the pulse suppressing means 22, and a resistor 28 inserted between the input terminal of the pulse suppressing means 22 and the minus terminal of the direct current motor 2. The values of the resistors 26, 28 are set so as to be lower than the threshold value of the pulse suppressing means 22 with the direct current motor 2 driven, and to be higher than the threshold value of the pulse suppressing means 22 with the direct current motor 2 stopped rotating.

Next, the operation of the direct current motor driving device according to this embodiment will be explained.

In this embodiment the direct current motor 2 is forcedly rotated in a direction opposite to its driving rotational direction so as to be actuated, and is forcedly stopped so as to be stopped driving.

It is general that when the direct current motor 2 is rotated by an external force, a counter electromotive force is generated by the direct current motor 2. In this embodiment, the direct current motor 2 is actuated by using a counter electromotive force generated when the direct current motor 2 is rotated in a direction opposite to its driving rotational direction. When the direct current motor 2 is rotated by an external force in a direction opposite to its driving rotational direction, a counter electromotive force is added to a source voltage of the direct current source 4 to be supplied to the resistance type voltage dividing circuit 16. Then the voltage signal of the resistance type dividing circuit 16 is increased to exceed the threshold value of the pulse generating means 12. Then when the direct current motor 2 is stopped rotating, the voltage signal of the resistance type voltage dividing circuit 16 is decreased back below the threshold value, and the pulse generating means 12 is triggered to generate the pulse signal. In response to this pulse signal the driving means 14 actuates the direct current motor 2 in its driving rotational direction.

Since the voltage signal outputted from the resistance type voltage dividing circuit 24 with the direct current motor 2 driven is below the threshold value, the pulse suppressing means 22 outputs to the pulse generating means 12 a holding signal for retaining the pulse signal at a high level. Consequently the direct current motor 2 continues its rotation.

When the direct current motor 2 is stopped rotating by an external force, a load of the direct current motor 2 is increased, and thus the current consumption is increased. Consequently the voltage drop across the resistance type voltage dividing circuit 24 is reduced, the voltage signal to the resistance type voltage dividing circuit 24 is increased to exceed the threshold value of the pulse suppressing means 22, and a pulse suppressing signal for suppressing the generation of the pulse signal of the pulse generating means 12 is generated. Consequently no pulse signal is outputted from the pulse generating means 12, and the direct current motor 2 is stopped.

An example of the circuit of the direct current motor driving device according to this embodiment will be explained with reference to FIG. 2.

The pulse generating means 12 is a one-shot multivibrator comprising a NAND gate 30, a condenser 32, and a NAND gate 34.

The NAND gate 30 has a first input terminal connected to the intermediate node of the resistance type voltage dividing circuit 16, and a second input terminal connected to the output terminal of the NAND gate 34, and an output terminal connected to the condenser 32. A threshold value of the NAND gate 30 is the threshold value of the pulse generating means 12. A first input terminal and a second input terminal of the NAND gate 34 is commonly connected to the condenser 32. The output terminal of the NAND gate 34 is connected to the second input terminal of the NAND gate 30.

The resistor 18 of the resistance type voltage divider 16 is connected in parallel to a condenser 36 for preventing the occurrence of noise.

The pulse suppressing means 22 comprises a NAND gate 38 and a resistor 40. A first input terminal of the NAND gate 38 and a second input terminal thereof are commonly connected to the intermediate node of the resistance type voltage dividing circuit 24. A resistor 40 is inserted between the output terminal of the NAND gate 38, and the intermediate node between the condenser 32 and the NAND gate 34. A threshold value of the NAND gate 38 is the threshold value of the pulse suppressing means 22.

A NAND gate 42 is connected as a buffer to the output terminal of the NAND gate 34 of the pulse generating means 12. A first input terminal of the NAND gate 34 and a second input terminal thereof are commonly connected to the output terminal of the NAND gate 34.

The driving means 14 comprises a resistor 44, an npn transistor 46, an npn transistor 48, a condenser 50 and a resistor 52. The resistor 44 is inserted between the output terminal of the NAND gate 42 and the base of the npn transistor 46. The npn transistor 46 and the npn transistor 48 are Darlington-connected. The condenser 50 is inserted between the base of the npn transistor 46 and the collector thereof. The resistor 52 is inserted between the collector of the npn transistor 46 and the plus terminal of the direct current source.

A condenser 54 is inserted between the plus terminal of the direct current motor 2 and the minus terminal thereof for preventing the occurrence of noise.

The operation of this exemplified circuit, shown in FIG. 2, of the direct current motor driving device will be explained.

With the direct current motor 2 stopped, a voltage at the minus terminal of the direct current motor 2 is substantially equal to a source voltage of the direct current source 4. The voltage dividing circuit 16 outputs a voltage signal which is slightlylower than a threshold value of the NAND gate 30 of the pulse generating means 12. The resistance type voltage dividing circuit 24 outputs a voltage signal which is slightly higher than a threshold value of the NAND gate 38. Consequently an output signal of the NAND gate 30 is of high level, and an output signal of the NAND gate 38 is of low level.

When the direct current motor 2 is rotated in a direction opposite to its driving rotational direction, a counter electromotive force generated by the direct current motor 2 is added to a source voltage of the direct current source 4 to be supplied to the resistance type voltage dividing circuit 16. Then a voltage signal of the resistance type voltage dividing circuit 16 is increased to be of high level and exceeds the threshold value of the NAND gate 30. Subsequently the opposite rotation of the direct current motor 2 is stopped, the voltage signal from the resistance type voltage dividing circuit 16 becomes slightly lower than the threshold value of the NAND gate 30 of the pulse generating means 12, and is of low level.

Consequently the one-shot multivibrator comprising the NAND gate 30, the condenser 32 and the NAND gate 34 is triggered by a fall of the input signal, and generates the pulse signal. In response to this pulse signal, the driving means 14 actuates the direct current motor 2.

With the direct current motor 2 driven, since the voltage signal from the resistance type voltage dividing circuit 24 is lower than the threshold value, the output signal of the NAND gate 38 of the pulse suppressing means 22 becomes high level, and consequently the direct current motor 2 continues rotating.

When the direct current motor 2 is stopped rotating by an external force, a load of the direct current motor 2 is increased, and thus current consumption is increased. Consequently, the voltage drop across the resistance type voltage dividing circuit 24 is reduced, the voltage signal of the resistance type voltage dividing circuit 24 is increased to exceed the threshold value of the NAND gate 22 of the pulse suppressing means 38, and the output signal of the NAND gate 38 becomes low level. Resultantly a charge accumulated in the condenser 32 is discharged, and no pulse signal is outputted from the pulse generating means 22, and the direct current motor 2 is stopped.

As described above, according to this embodiment, the direct current motor 2 can be actuated by forcedly rotating the same in a direction opposite to its driving direction, and can be stopped by forcedly stopping the same. Thus the direct current motor can be actuated and stopped without the use of a power switch.

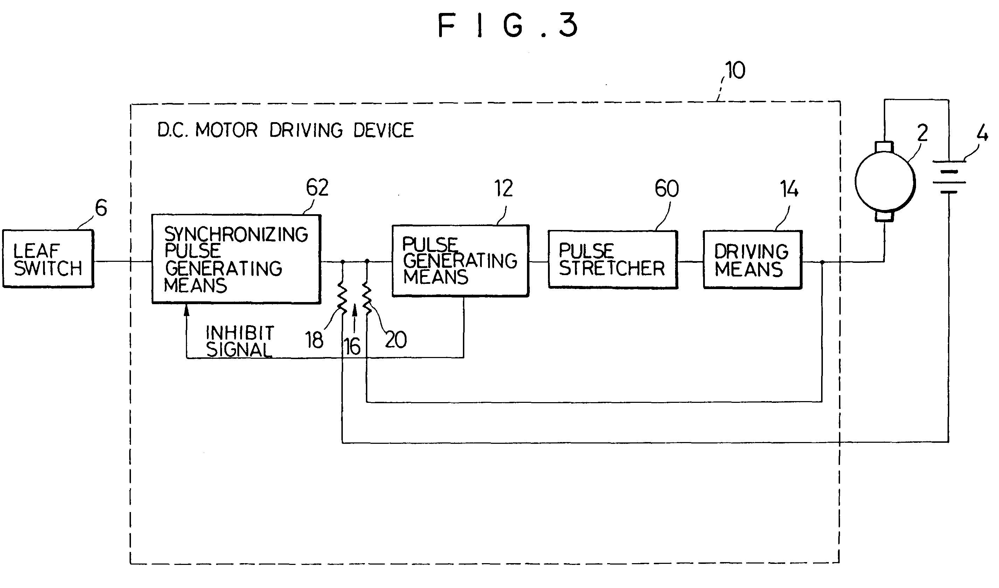

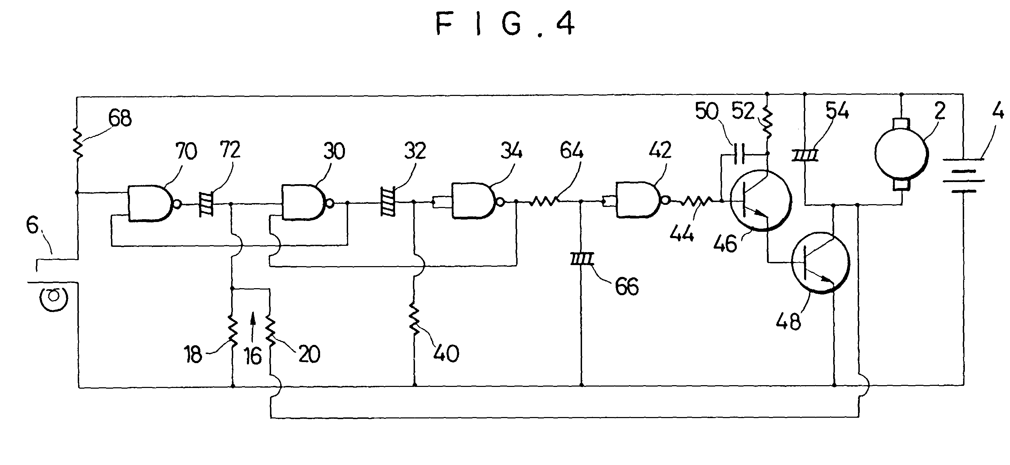

The direct current motor driving device according to a second embodiment of the present invention will be explained with reference to FIGs. 3 and 4. FIG. 3 is a block diagram of the direct current motor driving device according to the second embodiment. FIG. 4 is a circuit diagram of the direct current motor driving device. The members of the second embodiment which are common with the direct current motor driving device of FIGs. 1 and 2 are given common reference numbers to simplify and not to repeat their explanation.

In this embodiment, a three-pole direct current motor 2 is driven. A direct current motor 2 has a direct current source 4. The plus terminal of the direct current motor 2 is connected to the plus terminal of the direct current source 4. A direct current motor driving device 10 is provided to drive the direct current motor 2. There is provided a leaf switch 6 which turns on and off by the rotation of the rotary shaft of the direct current motor 2.

The direct current motor driving device 10 includes pulse generating means 12 which generates a pulse signal when an input signal exceeds a set threshold value, a pulse stretcher 60 which stretches a pulse signal outputted from the pulse generating means 12, and driving means 14 which drives the direct current motor 2 in response to the pulse signal from the pulse generating means 14.

A resistance type voltage dividing circuit 16 is inserted between the minus terminal of the direct current source 4 and the minus terminal of the direct current motor 2. The resistance type voltage dividing circuit 16 comprises a resistor 18 and a resistor 20. The values of the resistors 18, 20 are so set that a voltage signal produced by resistance-dividing a voltage by the resistance type voltage dividing circuit 16 is slightly below the threshold value of the input signal to the pulse generating means 12 with the direct current motor 2 stopped.

A synchronizing signal generating means 62 is provided before the pulse generating means 12. The synchronizing signal generating means 62 generates a pulse signal synchronized with ON/OFF of the leaf switch 6. A synchronizing pulse generated by the synchronizing pulse generating means 62 is outputted to the pulse generating means 12. An inhibit signal which suppresses the output of the synchronizing signal is being outputted from the pulse generating means 12 to the synchronizing pulse generating means 62.

Next, the operation of the direct current motor driving device according to this embodiment will be explained.

In this embodiment, the direct current motor 2 is rotated by forcedly rotating the same in a direction opposite to its driving rotational direction, and is stopped by forcedly stopping the same.

When the direct current motor 2 is rotated in a direction opposite to its driving rotational direction by an external force, a counter electromotive force is generated by the direct current motor 2 and is added to a source voltage of the direct current source 4 to be supplied to the resistance type voltage dividing circuit 16. Then a voltage signal of the resistance type voltage dividing circuit 16 is increased to exceed a threshold value of the pulse generating means 12, and a pulse signal is generated by the pulse generating means 12. This pulse signal is stretched by the pulse stretcher 60 to be inputted to the driving means 14, and the direct current motor 2 is actuated by the driving means 14 in its driving rotational direction.

When the direct current motor 2 is rotated in an opposite direction, the leaf switch 6 is turned on and off, but an inhibit signal is outputted from the pulse generating means 12 to the synchronizing pulse generating means 62 for suppressing the output of the synchronizing pulse signal. Accordingly the output of the synchronizing pulse signal from the synchronizing pulse generating means 62 is suppressed, and the pulse generating means 12 is not triggered.

With the direct current motor 2 driven, since the leaf switch 6 is turned on and off by the rotation of the rotary shaft of the direct current motor 2, the synchronizing pulse signal is continuously outputted by the synchronizing pulse generating means 62. The pulse generating means 12 is triggered by the synchronizing pulse signal to repeatedly output the pulse signal. Since the pulse signal from the pulse generating means 12 is stretched by the pulse stretcher 60 until a next pulse signal, the direct current motor 2 is set on rotating by the driving means 14.

When the direct current motor 2 is stopped rotating by an external force, the leaf switch 6 does not turn on and off, the synchronizing pulse signal is not outputted any more from the synchronizing pulse generating means 62. Resultantly the pulse generating means 12 is not triggered, the pulse signal is not outputted any more and the direct current motor 2 is stopped.

Next, an example of circuits of the direct current motor driving device according to this embodiment will be explained with reference to FIG. 4.

The pulse generating means 12 is a one-shot multivibrator comprising a NAND gate 30, a condenser 32, and a NAND gate 34.

The NAND gate 30 has a first input terminal connected to the intermediate node of the resistance type voltage dividing circuit 16, a second input terminal connected to the output terminal of the NAND gate 34, and an output terminal connected to the condenser 32. A threshold value of the NAND gate 34 is the threshold value of the pulse generating means 12. A first input terminal and a second input terminal of the NAND gate 34 are commonly connected to the condenser 32.

The minus terminal of the direct current source 4 is connected through the resistor 40 to the intermediate node between the condenser 32 and the NAND gate 34.

The pulse stretcher 60 is a delay circuit comprising a resistor 64 and the condenser 66.

The resistor 64 is inserted as a buffer between the output terminal of the NAND gate 34 of the pulse generating means 12 and the first input terminal of the NAND gate 42.

The driving means 14 comprises the resistor 44, an npn transistor 46, an npn transistor 48, a condenser 50 and a resistor 52. The resistor 44 is inserted between the output terminal of the NAND gate 42 and the base of the npn transistor 46. The npn transistor 46 and the npn transistor 48 are Darlington-connected. The condenser 50 is inserted between the base of the npn transistor 46 and the collector thereof. The resistor 52 is inserted between the collector of the npn transistor 46 and the plus terminal of the direct current source 4.

The condenser 54 is inserted between the plus terminal of the direct current motor 2 and the minus terminal thereof for preventing the occurrence of noise.

The synchronizing pulse generating means 62 comprises a resistor 68, a NAND gate 70 and a condenser 72.

The resistor 68 is inserted between the leaf switch 6 and the plus terminal of the direct current source 4. The NAND gate 70 has a first input terminal connected to the leaf switch 6, a second input terminal connected to the output terminal of the NAND gate 30 of the pulse generating means 12, and an output terminal connected to the condenser 72. The condenser 72 is inserted between the output terminal of the NAND gate 70 and the first input terminal of the NAND gate 30 of the pulse generating means 12.

The operation of the example of circuits of the direct current motor driving device shown in FIG. 4 will be explained.

With the direct current motor 2 stopped, a voltage of the minus terminal of the direct current motor 2 is substantially equal to a source voltage of the direct current source 4, a voltage signal slightly lower than a threshold value of the NAND gate 30 of the pulse generating means 12 is outputted by the voltage dividing circuit 16 and consequently an output signal of the NAND gate 30 is of high level.

When the direct current motor 2 is rotated in a direction opposite to its driving rotational direction, a counter electromotive force generated by the direct current motor 2 is added to the source voltage of the direct current source 4 to be supplied to the resistance type voltage dividing circuit 16. Then, a voltage signal of the resistance type voltage dividing circuit 16 is increased to exceed the threshold value of the NAND gate 30 of the pulse generating means 12 and is of high level.

When the direct current motor 2 is rotated in an opposite direction, the leaf switch 6 is turned on and off, but an inhibit signal of low level is supplied from the NAND gate 30 of the pulse generating means 12 to the NAND gate 70 of the synchronizing pulse signal generating means 62. Consequently the output of the synchronizing pulse signal is suppressed, and the pulse generating means 12 is not triggered.

Subsequently when the opposite rotation of the direct current motor 2 is stopped, the voltage signal from the resistance type voltage dividing circuit 16 again has a slightly lower value than the threshold value of the NAND gate 30 of the pulse generating means 12, i.e., is of low level.

Consequently the one-shot multivibrator comprising the NAND gate 30, the condenser 32, and the NAND gate 34 is triggered by a fall of the input signal and generates the pulse signal. This pulse signal is stretched by the pulse stretcher 60 comprising the resistor 64 and the condenser 66 to be supplied to the NAND gate 42 as a buffer, and the driving means 14 actuates the direct current motor 2.

When the direct current motor 2 is actuated, the leaf switch 6 is turned on and off,while the inhibit signal from the output terminal of the NAND gate 30 becomes of high level. Then the synchronizing pulse generating means 62 outputs the synchronizing signal, and the pulse generating means 12 is triggered by this synchronizing signal to continue outputting the pulse signal. The pulse signal from the pulse generating means 12 is stretched by the pulse stretcher 60 until a next pulse signal, and the direct current motor 2 is set on rotating by the driving means 14.

When the direct current motor is stopped rotating by an external force, the leaf switch 6 does not turn on and off, and the synchronizing pulse signal is not outputted by the synchronizing pulse generating means 62. Resultantly the pulse generating means 12 is not triggered, and the pulse signal is not outputted. And the direct current motor 2 is stopped.

In this embodiment, as described above, the direct current motor 2 can be actuated by forcedly rotating the same in a direction opposite to its driving rotational direction, and can be stopped by forcedly stopping the same. Thus it is possible to actuate and stop the direct current motor with the use of a power switch.

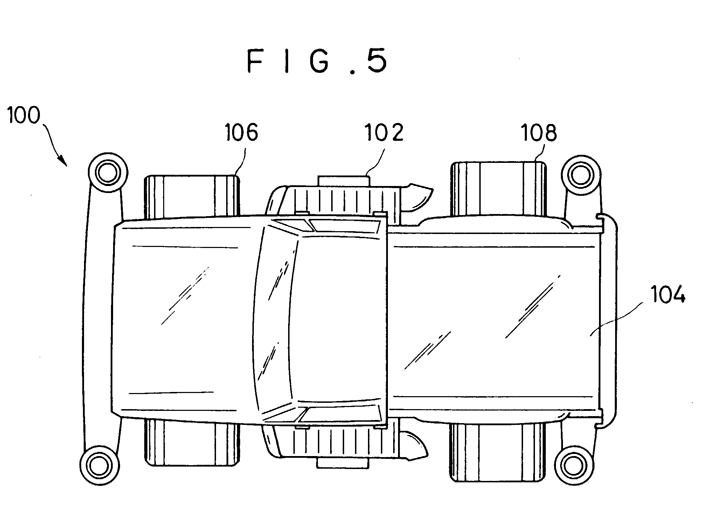

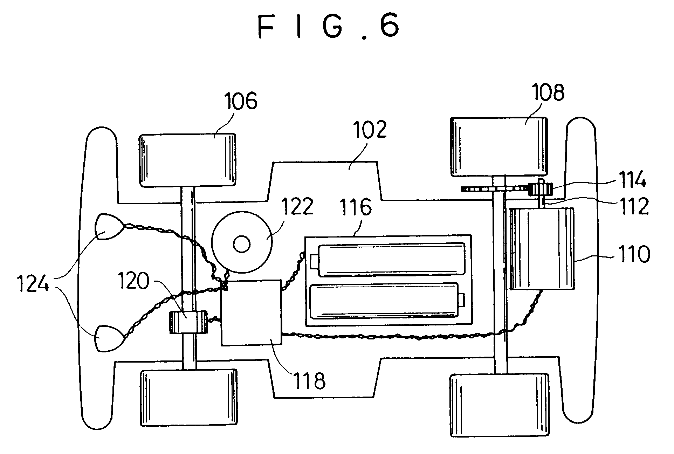

With reference to FIGs. 5 and 6 an example of applications of the direct current motor driving device according to the present invention in which the device is used in a toy car, one of many possible mobile toys, will be explained. FIG. 5 is an appearance view of the toy car with the outer shell put on, and FIG. 6 is an appearance view of the toy car of FIG. 5 with the outer shell removed.

In this application example, major parts of the toy car 100 are mounted on a chassis 102, and all the parts are covered with an outer shell 104.

Front wheels 106 and rear wheels 108 are rotatably mounted on the chassis 102. A direct current motor 110 is mounted on the rear part of the chassis 102. The rotary shaft 112 of the direct current motor 110 is arranged to rotate the rear wheels 108 through a gear 114.

A direct current source 116 is mounted on the central part of the chassis 102. The direct current source 116 is two serially connected cells.

A motor driving device 118 according to the present invention is mounted on the chassis 102 between the direct current source 116 and the front wheels 106. This direct current motor driving device 118 incorporates the circuit of FIGS. 2 or 4.

In the case that the circuit of FIG. 4 is built in the direct current motor driving device 118, the leaf switch 120 is mounted on the axle of the front wheels 106. This leaf switch 120 is connected to the direct current motor driving device 118.

A speaker 122 and headlights 124 are mounted on the forward part of the chassis 102. The speaker 122 and the headlights 124 are connected to the output side of the direct current motor driving device 118 as is the direct current motor 110. Thus when the direct current motor 110 is actuated, the speaker 122 emits sounds and the headlights 124 turn on and off at the same time.

The basic operation of this toy car 100 will be explained.

To start driving the toy car 100, merely the toy car 100 is lightly pushed rearward with a hand, and is then released. When the toy car 100 is pushed rearward, a counter electromotive force from the direct current motor 110 actuates the direct current motor 110, and the toy car 100 drives forward.

To stop driving the toy car 100, merely the toy car 100 is stopped with a hand. The rotation of the direct current motor 2 is stopped by forcedly stopping the same, and the driving of the toy car 100 is stopped.

By connecting the speaker 122 and the headlights 124 to the output side of the direct current motor driving device 118, while driving, engine sounds are emitted, the headlights 124 turning on and off.

The toy car 100 according to this application can be played with in the following various ways which have not been possible with conventional toy cars.

In a first way, when a player runs the toy car rearward, the toy car goes rearward by inertia, then pauses, and then drives forward back into a player's hand.

In a second way, the toy car is released from a player's hand on a slope to let the toy car run down backwards. The toy car is caused to run down the slope by its own weight, and when the toy car finishes running down and stops, the toy car drives forward up the slope and reaches the top. When the toy car stops at the top of the slope, the toy car again runs down the slope by its own weight. The toy car repeats the auto-running as a permanent motion, ascending and descending the slope until the direct current source runs out. By making use of this motion, it is possible to run a demonstration of the toy car in the absence of care-takers at toy shops.

The motor driving device according to the present invention is applied to toy cars, but the device is applicable to mobile toys other than toy cars. In addition, this device is widely applicable as the power source for other kinds of toys, and as the power sources for practical tools and instruments.

## Claims

1. A direct current motor driving device for driving a direct current motor (2) having a plus terminal and a minus terminal, the device comprising:
a direct current source (4) having a plus terminal and a minus terminal, the plus terminal being connected to the plus terminal of the direct current motor (2);
pulse generating means (12) for generating a pulse signal when an input signal to an input terminal of the pulse generating means (12) exceeds a set threshold value;
driving means (14) for driving the direct current motor (2) in response to the pulse signal outputted by the pulse generating means (12) and
a first resistance type voltage dividing circuit (16) inserted beween the minus terminal of the direct current source and a minus terminal of the direct current motor for providing as the input signal to the pulse generating means (12) a voltage signal produced by resistance-dividing a voltage between these terminals in a first ratio;
whereby when a counter electromotive force generated by the direct current motor (2) by the rotation of the direct current motor by an external force in a direction opposite to its driving rotational direction is added to a source voltage of the direct current source (4) to be supplied to the first resistance type voltage dividing means (16), the voltage signal of the first resistance type voltage dividing means (16) is increased to exceed the set threshold value of the pulse generating means (12), and the pulse signal is generated by the pulse generating means to actuate the direct current motor (2).

2. A direct current motor driving device according to claim 1, further comprising:
pulse suppressing means (22) for suppressing generation of the pulse signal by the pulse generating means (12) when an input signal of the pulse suppressing means (22) exceeds a set threshold value; and
a second resistance type voltage dividing circuit (24) inserted between the plus terminal of the direct current motor (2) and the minus terminal of the direct current motor (2) for providing as the input signal of the pulse suppressing means (22) a voltage signal produced by resistance-dividing a voltage between these terminals in a second ratio;
whereby when the voltage drop across the second resistance type voltage dividing circuit (24) is decreased by stopping rotation of the direct current motor (2) by an external force, the voltage signal of the second resistance type voltage dividing circuit (24) is increased to exceed the set threshold value of the pulse suppressing means (22), generation of the pulse signal of the pulse generating means (12) is suppressed, and the drive of the direct current motor (2) is stopped.

3. A direct current motor driving device according to claim 1, further comprising:
synchronizing pulse generating means (62) for generating a synchronizing pulse signal synchronized with the rotation of the direct current motor (2) and supplying the synchronizing pulse signal to the pulse generating means (12).
the generation of the pulse signal by the pulse generating means (12) being maintained by the synchronizing pulse signal from the synchronizing pulse generating means (62) while the direct current motor (2) is rotating; and
the generation of the synchronizing pulse signal by the synchronizing pulse generating means (62) being suppressed to stop the drive of the direct current motor (2) by stopping the rotation of the direct current motor (2) by an external force.

4. A direct current motor driving device according to claim 1, wherein
the pulse generating means (12) comprises:
a first NAND gate (30) including a first input terminal connected to the input terminal of the pulse generating means, a second input terminal, and an output terminal;
a second NAND gate (34) including a first input terminal, a second input terminal connected to the first input terminal and an output terminal connected to the second input terminal of the first NAND gate (30); and
a condenser (32) inserted between the output terminal of the first NAND gate (30) and the first input terminal of the second NAND gate (34).
the pulse generating means (12) being a one-shot multivibrator for outputting the pulse signal from the output terminal of the second NAND gate (34) when the input signal to the pulse generating means (12) exceeds the threshold value of the first NAND gate (30); and
the first resistance type voltage dividing circuit (16) comprises:
a first resistor (18) inserted between the minus terminal of the direct current source (4) and the input terminal of the pulse generating means (12), and
a second resistor (20) inserted between the input terminal of the pulse generating means (12) and the minus terminal of the direct current motor (2).

5. A direct current motor driving device according to claim 2, wherein
the pulse generating means (12) comprises:
a first NAND gate (30) including a first input terminal connected to the input terminal of the pulse generating means, a second input terminal, and an output terminal;
a second NAND gate (34) including a first input terminal, a second input terminal connected to the first input terminal and an output terminal connected to the second input terminal of the first NAND gate (30); and
a condenser (32) inserted between the output terminal of the first NAND gate (30) and the first input terminal of the second NAND gate (34);
the pulse generating means (12) being a one-shot multivibrator for outputting the pulse signal from the output terminal of the second NAND gate (34) when the input signal to the pulse generating means (12) exceeds the threshold value of the first NAND gate (30);
the first resistance type voltage dividing circuit comprises:
a first resistor (18) inserted beween the minus terminal of the direct current source (4) and the input terminal of the pulse generating means (12), and
a second resistor (20) inserted beteeen the input terminal of the pulse generating means (12) and the minus terminal of the direct current motor (2);
the pulse suppressing means (22) comprises:
a third NAND gate (38) including a first input terminal connected to the input terminal of the pulse suppressing means (22) a second input terminal connected to the first input terminal, and an output terminal; and
a third resistor (40) connected to the output terminal of the third NAND gate (38), to the first input terminal of the second NAND gate (34) of the pulse generating means (12), and to the node of the condenser (32), and
the second resistance type voltage dividing circuit (24) comprises:
a fourth resistor (26) inserted between the plus terminal of the direct current source (4) and an input terminal of the pulse suppressing means (22), and
a fifth resistor (28) inserted between the input terminal of the pulse suppressing means (22) and the minus terminal of the direct current motor (2).

6. A direct current motor driving device according to claim 3, wherein
the pulse generating means (12) comprises:
a first NAND gate (30) including a first input terminal connected to the input terminal of the pulse generating means, a second input terminal, and an output terminal;
a second NAND gate (34) including a first input terminal, a second input terminal connected to the first input terminal and an output terminal connected to the second input terminal of the first NAND gate (30); and
a condenser (32) inserted between the output terminal of the first NAND gate (30) and the first input terminal of the second NAND gate (34);
the pulse generating means (12) being a one-shot multivibrator for outputting the pulse signal from the output terminal of the second NAND gate (34) when the input signal to the pulse generating means (12) exceeds the threshold value of the first NAND gate (30);
the first resistance type voltage dividing circuit comprises:
a first resistor (18) inserted between the minus terminal of the direct current source (4) and the input terminal of the pulse generating means (12), and
a second resistor (20) inserted between the input terminal of the pulse generating means (12) and the minus terminal of the direct current motor (2); and the synchronizing pulse generating means (62) comprises:
switching means (6) inserted between the plus terminal of the direct current source (4) and the minus terminal thereof and turning on and off by rotation of a rotary shaft of the direct current motor (2);
a sixth resistor (68) serially connected to the switching means (6), and
a fourth NAND gate (70) including a first input terminal connected to the switching means (6), a second input terminal and an output terminal.

7. A direct current motor driving device according to any one of claims 1 to 6, further comprising augmenting means inserted between the pulse generating means (12) and the driving means (14) for augmenting the pulse signal from the pulse generating means (12).

8. A mobile toy comprising:
a mobile toy body (102);
running wheels (106, 108) for running the mobile toy body (102) in a required direction;
a direct current motor (110) having a plus terminal and a minus terminal for rotating the running wheels (106, 108); and
a direct current motor driving device (118) according to any preceding claim.

## Patentansprüche

1. Ein Gleichstrommotor-Antriebsgerät zum Antrieb eines Gleichstrommotors (2) mit einer Plusklemme und einer Minusklemme, wobei das Gerät umfaßt:
eine Gleichstromquelle (4) mit einer Plusklemme und einer Minusklemme, wobei die Plusklemme an die Plusklemme des Gleichstrommotors (2) angeschlossen ist;
Impulserzeugungsvorrichtung (12) zur Erzeugung eines Impulssignals, wenn ein an eine Eingangsklemme der Impulserzeugungsvorrichtung (12) angelegtes Eingangssignal einen Schwellensollwert überschreitet;
Antriebsvorrichtung (14) zum Antrieb des Gleichstrom-motors (2) als Reaktion auf das von der Impulserzeugungs-vorrichtung (12) ausgegebene Impulssignal und
eine erste ohmsche Spannungsteilerschaltung (16), die zwischen der Minusklemme der Gleichstromquelle und einer Minusklemme des Gleichstrommotors eingefügt ist, um als Eingangssignal für die Impulserzeugungsvorrichtung (12) ein durch ohmsche Teilung einer Spannung zwischen diesen Klemmen in einem Erstverhältnis erzeugtes Spannungssignal bereit-zustellen;
wodurch, wenn eine vom Gleichstrommotor (2) durch die Drehung des Gleichstrommotors durch eine externe Kraft in gegenläufiger Richtung zu seiner Antriebsdrehrichtung erzeugte gegenelektromotorische Kraft einer Quellenspannung der Gleichstromquelle (4), die der ersten ohmschen Spannungsteilerschaltung (16) zuzuführen ist, hinzugefügt wird, das Spannungssignal der ersten ohmschen Spannungsteilerschaltung (16) zur Überschreitung des Schwellensollwertes der Impulserzeugungsvorrichtung (12) erhöht wird und das Impulssignal von der Impulserzeugungsvorrichtung zum Stellen des Gleichstrommotors (2) erzeugt wird.

2. Ein Gleichstrommotor-Antriebsgerät gemäß Anspruch 1, das des weiteren umfaßt:
Impulsunterdrückungsvorrichtung (22) zur Unterdrückung der Erzeugung des Impulssignals durch die Impulserzeugungs-vorrichtung (12), wenn ein Eingangssignal der Impulsunterdrückungsvorrichtung (22) einen Schwellensollwert überschreitet; und
eine zwischen der Plusklemme des Gleichstrommotors (2) und der Minusklemme des Gleichstrommotors (2) eingefügte zweite ohmsche Spannungsteilerschaltung zur Bereitstellung, als Eingangssignal für die Impulsunterdrückungsvorrichtung (22), eines durch ohmsche Teilung einer Spannung zwischen diesen Klemmen in einem Zweitverhältnis erzeugten Spannungssignals;
wodurch, wenn der Spannungsabfall über die zweite ohmsche Spannungsteilerschaltung (24) durch Anhalten der Drehung des Gleichstrommotors (2) durch eine externe Kraft gesenkt wird, das Spannungssignal der zweiten ohmschen Spannungsteiler-schaltung (24) erhöht wird, um den Schwellensollwert der Impulsunterdrückungsvorrichtung (22) zu überschreiten, Erzeugung des Impulssignals der Impulserzeugungsvorrichtung (12) unterdrückt und der Antrieb des Gleichstrommotors (2) angehalten wird.

3. Ein Gleichstrommotor-Antriebsgerät gemäß Anspruch 1, das des weiteren umfaßt:
synchronisierende Impulserzeugungsvorrichtung (62) zur Erzeugung eines synchronisierenden Impulssignals, das mit der Drehung des Gleichstrommotors (2) synchronisiert ist und das synchronisierende Impulssignal für die Impulserzeugungs-vorrichtung (12) liefert;
die Erzeugung des Impulssignals durch die Impulserzeugungsvorrichtung (12), aufrechterhalten durch das synchronisierende Impulssignal von der synchronisierenden Impulserzeugungsvorrichtung (62) bei sich drehendem Gleichstrommotor (2); und
die Erzeugung des synchronisierenden Impulssignals, wobei die synchronisierende Impulserzeugungsvorrichtung (62) unterdrückt wird, um den Antrieb des Gleichstrommotors (2) durch Anhalten des Gleichstrommotors (2) durch eine externe Kraft anzuhalten.

4. Ein Gleichstrommotor-Antriebsgerät gemäß Anspruch 1, wobei die Impulserzeugungsvorrichtung (12) umfaßt:
ein erstes NAND-Gatter (30) einschließlich einer ersten Eingangsklemme, die an die Eingangsklemme der Impulserzeugungsvorrichtung angeschlossen ist, einer zweiten Eingangsklemme und einer Ausgangsklemme;
ein zweites NAND-Gatter (34) einschließlich einer ersten Eingangsklemme, einer an die erste Eingangsklemme angeschlossenen zweiten Eingangsklemme und einer Ausgangs-klemme, die an die zweite Eingangsklemme des ersten NAND-Gatters (30) angeschlossen ist; und
einen Kondensator (32), der zwischen der Ausgangsklemme des ersten NAND-Gatters (30) und der ersten Eingangsklemme des zweiten NAND-Gatters (34) eingefügt ist;
die Impulserzeugungsvorrichtung (12) als monostabiler Multivibrator zur Ausgabe des Impulssignals von der Ausgangsklemme des zweiten NAND-Gatters (34), wenn das Eingangssignal für die Impulserzeugungsvorrichtung (12) den Schwellenwert des ersten NAND-Gatters (30) überschreitet; und
die erste ohmsche Spannungsteilerschaltung (16) umfaßt:
einen ersten Widerstand (18), der zwischen der Minusklemme der Gleichstromquelle (4) und der Eingangsklemme der Impulserzeugungsvorrichtung (12) eingefügt ist, und
einen zweiten Widerstand (2), der zwischen der Eingangsklemme der Impulserzeugungsvorrichtung (12) und der Minusklemme des Gleichstrommotors (2) eingefügt ist.

5. Ein Gleichstrommotor-Antriebsgerät gemäß Anspruch 2, wobei die Impulserzeugungsvorrichtung (12) umfaßt:
ein erstes NAND-Gatter (30) einschließlich einer ersten Eingangsklemme, die an die Eingangsklemme der Impulserzeugungsvorrichtung angeschlossen ist, einer zweiten Eingangsklemme und einer Ausgangsklemme;
ein zweites NAND-Gatter (34) einschließlich einer ersten Eingangsklemme, einer an die erste Eingangsklemme angeschlossenen zweiten Eingangsklemme und einer Ausgangsklemme, die an die zweite Eingangsklemme des ersten NAND-Gatters (30) angeschlossen ist; und
einen Kondensator (32), der zwischen der Ausgangsklemme des ersten NAND-Gatters (30) und der ersten Eingangsklemme des zweiten NAND-Gatters (34) eingefügt ist;
die Impulserzeugungsvorrichtung (12) als monostabiler Multivibrator zur Ausgabe des Impulssignals von der Ausgangsklemme des zweiten NAND-Gatters (34), wenn das Eingangssignal für die Impulserzeugungsvorrichtung (12) den Schwellenwert des ersten NAND-Gatters (30) überschreitet; und
die erste ohmsche Spannungsteilerschaltung (16) umfaßt:
einen ersten Widerstand (18), der zwischen der Minusklemme der Gleichstromquelle (4) und der Eingangsklemme der Impulserzeugungsvorrichtung (12) eingefügt ist, und
einen zweiten Widerstand (20), der zwischen der Eingangsklemme der Impulserzeugungsvorrichtung (12) und der Minusklemme des Gleichstrommotors (2) eingefügt ist;
die Impulsunterdrückungsvorrichtung (22) umfaßt:
ein drittes NAND-Gatter (38) einschließlich einer an die Eingangsklemme der Impulsunterdrückungsvorrichtung (22) angeschlossenen ersten Eingangsklemme, einer an die erste Eingangsklemme angeschlossenen zweiten Eingangsklemme und einer Ausgangsklemme; und
einen dritten Widerstand (40), der an die Ausgangsklemme des dritten NAND-Gatters (38), an die erste Eingangsklemme des zweiten NAND-Gatters (34) der Impulserzeugungsvorrichtung (12) und den Knoten des Kondensators (32) angeschlossen ist, und
die zweite ohmsche Spannungsteilerschaltung (24) umfaßt:
einen vierten Widerstand (26), der zwischen der Plusklemme der Gleichstromquelle (4) und einer Eingangsklemme der Impulsunterdrückungsvorrichtung (22) eingefügt ist, und
einen fünften Widerstand (28), der zwischen der Eingangsklemme der Impulsunterdrückungsvorrichtung (22) und der Minusklemme des Gleichstrommotors (2) eingefügt ist.

6. Ein Gleichstrommotor-Antriebsgerät gemäß Anspruch 3, wobei die Impulserzeugungsvorrichtung (12) umfaßt:
ein erstes NAND-Gatter (30) einschließlich einer ersten Eingangsklemme, die an die Eingangsklemme der Impulserzeugungsvorrichtung angeschlossen ist, einer zweiten Eingangsklemme und einer Ausgangsklemme;
ein zweites NAND-Gatter (34) einschließlich einer ersten Eingangsklemme, einer an die erste Eingangsklemme angeschlossenen zweiten Eingangsklemme und einer Ausgangs-klemme, die an die zweite Eingangsklemme des ersten NAND-Gatters (30) angeschlossen ist; und
einen Kondensator (32), der zwischen der Ausgangsklemme des ersten NAND-Gatters (30) und der ersten Eingangsklemme des zweiten NAND-Gatters (34) eingefügt ist;
die Impulserzeugungsvorrichtung (12) als monostabiler Multivibrator zur Ausgabe des Impulssignals von der Ausgangsklemme des zweiten NAND-Gatters (34), wenn das Eingangssignal für die Impulserzeugungsvorrichtung (12) den Schwellenwert des ersten NAND-Gatters (30) überschreitet; und
die erste ohmsche Spannungsteilerschaltung (16) umfaßt:
einen ersten Widerstand (18), der zwischen der Minusklemme der Gleichstromquelle (4) und der Eingangsklemme der Impulserzeugungsvorrichtung (12) eingefügt ist, und
einen zweiten Widerstand (20), der zwischen der Eingangsklemme der Impulserzeugungsvorrichtung (12) und der Minusklemme des Gleichstrommotors (2) eingefügt ist; und
die synchronisierende Impulserzeugungsvorrichtung (62) umfaßt:
Schaltvorrichtung (6), die zwischen der Plusklemme der Gleichstromquelle (4) und deren Minusklemme eingefügt ist und durch Drehung einer Rotationswelle des Gleichstrommotors (2) ein-und ausgeschaltet wird;
einen sechsten Widerstand (68), der seriell an die Schaltvorrichtung (6) angeschlossen ist, und
ein viertes NAND-Gatter (70) einschließlich einer an die Schaltvorrichtung (6) angeschlossen ersten Eingangsklemme, einer zweiten Eingangsklemme und einer Ausgangsklemme.

7. Ein Gleichstrommotor-Antriebsgerät gemäß eines beliebigen Anspruchs 1 bis 6, das des weiteren umfaßt eine Zunahmevorrichtung, die zwischen der Impulserzeugungsvorrichtung (12) und der Antriebsvorrichtung (14) zur Erhöhung des Impulssignals von der Impulserzeugungsvorrichtung (12) eingefügt wird.

8. Ein mobiles Spielzeug, das umfaßt:
einen Mobilspielzeug-Körper (102);
Laufräder (106, 108) zum Antrieb des Mobilspielzeug-Körpers (102) in die gewünschte Richtung;
einen Gleichstrommotor (110) mit einer Plusklemme und einer Minusklemme zum Drehen der Laufräder (106, 108); und
ein Gleichstrommotor-Antriebsgerät (118) gemäß jedes beliebigen vorangegangenen Anspruchs.

## Revendications

1. Un dispositif d'entraînement de moteur à courant continu pour entraîner un moteur à courant continu (2) ayant une borne positive et une borne négative, le dispositif comprenant:
une source de courant continu (4) ayant une borne positive et une borne négative, la borne positive étant raccordée sur la borne positive du moteur à courant continu (2);
un moyen générateur d'impulsions (12) pour produire un signal d'impulsion quand un signal d'impulsion vers une borne d'entrée du moyen générateur d'impulsions (12) dépasse une valeur réglée de seuil;
un moyen d'entraînement (14) pour entraîner le moteur à courant continu (2) en réaction au signal d'impulsion sorti par le moyen générateur d'impulsions (12) et
un premier circuit réducteur de tension du type rhéostatique (16) inséré entre la borne négative de la source de courant continu et une borne négative du moteur à courant continu pour fournir en tant que signal d'entrée au moyen générateur d'impulsions (12) un signal de tension produit en réduisant de manière rhéostatique une tension entre ces bornes dans un premier rapport;
suivant lequel quand une force contre-électromotive produite par le moteur à courant continu (2) par la rotation du moteur à courant continu par une force extérieure dans le sens contraire à son sens de la rotation d'entraînement est ajoutée à une tension d'origine de la source de courant continu (4) devant être fournie au premier moyen réducteur de tension du type rhéostatique (16), le signal de tension du premier moyen réducteur de tension du type rhéostatique (16) est augmenté pour dépasser la valeur réglée de seuil du moyen générateur d'impulsions (12), et le signal d'impulsion est produit par le moyen générateur d'impulsions pour actionner le moteur à courant continu (2).

2. Un dispositif d'entraînement de moteur à courant continu, suivant la revendication 1, comprenant également:
un moyen suppresseur d'impulsions (22) pour supprimer la production du signal d'impulsion par le moyen générateur d'impulsions (12) quand un signal d'entrée du moyen suppresseur d'impulsions (22) dépasse une valeur réglée de seuil; et
un deuxième circuit réducteur de tension du type rhéostatique (24) inséré entre la borne positive du moteur à courant continu (2) et la borne négative du moteur à courant continu (2) pour fournir en tant que signal d'entrée du moyen suppresseur d'impulsions (22) un signal de tension produit en réduisant de manière rhéostatique une tension entre ces bornes dans un deuxième rapport;
suivant lequel quand la chute de tension en travers du deuxième circuit réducteur de tension du type rhéostatique (24) est diminuée en arrêtant la rotation du moteur à courant continu (2) par une force extérieure, le signal de tension du deuxième circuit réducteur de tension du type rhéostatique (24) est augmenté pour dépasser la valeur réglée de seuil du moyen suppresseur d'impulsions (22), la production du signal d'impulsion du moyen générateur d'impulsions (12) est supprimée, et l'entraînement du moteur à courant continu est arrêté.

3. Un dispositif d'entraînement de moteur à courant continu, suivant la revendication 1, comprenant également:
un moyen générateur d'impulsions de synchronisation (62) pour produire un signal d'impulsion de synchronisation synchronisé avec la rotation du moteur à courant continu (2) et pour fournir le signal d'impulsion de synchronisation au moyen générateur d'impulsions (12).
la production du signal d'impulsion par le moyen générateur d'impulsions (12) étant maintenue par le signal d'impulsion de synchronisation du moyen générateur d'impulsions de synchronisation (62) pendant que le moteur à courant continu (2) tourne; et
la production du signal d'impulsion de synchronisation par le moyen générateur d'impulsions de synchronisation (62) étant supprimée pour arrêter l'entraînement du moteur à courant continu (2) en arrêtant la rotation du moteur à courant continu (2) par une force extérieure.

4. Un dispositif d'entraînement de moteur à courant continu, suivant la revendication 1, dans lequel
le moyen générateur d'impulsions (12) comprend:
une première porte NAND (30) y compris une premier borne d'entrée raccordée sur la borne d'entrée du moyen générateur d'impulsions, une deuxième borne d'entrée, et une borne de sortie;
une deuxième porte NAND (34) y compris une premier borne d'entrée, une deuxième borne d'entrée raccordée sur la première borne d'entrée et un borne de sortie raccordée sur la deuxième borne d'entrée de la première porte NAND (30); et
un condenseur (32) inséré entre la borne de sortie de la première porte NAND (3) et la première borne d'entrée de la deuxième porte NAND (34);
le moyen générateur d'impulsions (12) étant un multivibrateur monostable pour sortir le signal d'impulsion de la borne de sortie de la deuxième porte NAND (34) quand le signal d'entrée vers le moyen générateur d'impulsions (12) dépasse la valeur de seuil de la première porte NAND (30); et
le premier circuit réducteur de tension du type rhéostatique (16) comprend:
une première résistance (18) insérée entre la borne négative de la source de courant continu (4) et la borne d'entrée du moyen générateur d'impulsions (12), et
une deuxième résistance (20) insérée entre la borne d'entrée du moyen générateur d'impulsions (12) et la borne négative du moteur à courant continu (2).

5. Un dispositif d'entraînement de moteur à courant continu, suivant la revendication 2, dans lequel
le moyen générateur d'impulsions (12) comprend:
une première porte NAND (30) y compris une première borne d'entrée raccordée sur la borne d'entrée du moyen générateur d'impulsions, une deuxième borne d'entrée, et une borne de sortie;
une deuxième porte NAND (34) y compris une première borne d'entrée, une deuxième borne d'entrée raccordée sur la première borne d'entrée et une borne de sortie raccordée sur la deuxième borne d'entrée de la première porte NAND (30); et
un condenseur (32) inséré entre la borne de sortie de la première porte NAND (30) et la première borne d'entrée de la deuxième porte NAND (34);
le moyen générateur d'impulsions (12) étant un multivibrateur monostable pour sortir le signal d'impulsion de la borne de sortie de la deuxième porte NAND (34) quand le signal d'entrée vers le moyen générateur d'impulsions (12) dépasse la valeur de seuil de la première porte NAND (30);
le premier circuit réducteur de tension du type rhéostatique comprend:
une première résistance (18) insérée entre la borne négative de la source de courant continu (4) et la borne d'entrée du moyen générateur d'impulsions (12), et
une deuxième résistance (20) insérée entre la borne d'entrée du moyen générateur d'impulsions (12) et la borne négative du moteur à courant continu (2);
le moyen suppresseur d'impulsions (22) comprend:
une troisième porte NAND (38) y compris une première borne d'entrée raccordée sur la borne d'entrée du moyen suppresseur d'impulsions (22) une deuxième borne d'entrée raccordée sur la première borne d'entrée, et une borne de sortie; et
une troisième résistance (40) raccordée sur la borne de sortie de la troisième porte NAND (38), sur la première borne d'entrée de la deuxième porte NAND (34) du moyen générateur d'impulsions (12), et sur le noeud du condenseur (32), et
le deuxième circuit réducteur de tension du type rhéostatique (24) comprend:
une quatrième résistance (26) insérée entre la borne positive de la source de courant continu (4) et une borne d'entrée du moyen suppresseur d'impulsions (22), et
une cinquième résistance (28) insérée entre la borne d'entrée du moyen suppresseur d'impulsions (22) et la borne négative du moteur à courant continu (2).

6. Un dispositif d'entraînement de moteur à courant continu suivant la revendication 3, dans lequel
le moyen générateur d'impulsions (12) comprend:
une première porte NAND (30) y compris une première borne d'entrée raccordée sur la borne d'entrée du moyen générateur d'impulsions, une deuxième borne d'entrée, et une borne de sortie;
une deuxième porte NAND (34) y compris une première borne d'entrée, une deuxième borne d'entrée raccordée sur la première borne d'entrée et une borne de sortie raccordée sur la deuxième borne d'entrée de la première porte NAND (30); et
un condenseur (32) inséré entre la borne de sortie de la première porte NAND (30) et la première borne d'entrée de la deuxième porte NAND (34);
le moyen générateur d'impulsions (12) étant un multivibrateur monostable pour sortir le signal d'impulsion de la borne de sortie de la deuxième porte NAND (34) quand le signal d'entrée vers le moyen générateur d'impulsions (12) dépasse la valeur de seuil de la première porte NAND (30);
le premier circuit réducteur de tension du type rhéostatique comprend:
une première résistance (18) insérée entre la borne négative de la source de courant continu (4) et la borne d'entrée du moyen générateur d'impulsions (12), et
une deuxième résistance (20) insérée entre la borne d'entrée du moyen générateur d'impulsions (12) et la borne négative du moteur à courant continu (2); et
le moyen générateur d'impulsions de synchronisation (62) comprend:
un moyen de commutation (6) inséré entre la borne positive de la source de courant continu (4) et la borne négative de celle-ci et étant allumé et éteint par la rotation d'un arbre rotatif du moteur à courant continu (2);
une sixième résistance (68) raccordée en série sur le moyen de commutation (6), et
une quatrième porte NAND (70) y compris une première borne d'entrée raccordée sur le moyen de commutation (6), une deuxième borne d'entrée et une borne de sortie.

7. Un dispositif d'entraînement de moteur à courant continu, suivant les revendications 1 à 6, comprenant également un moyen d'augmentation inséré entre le moyen générateur d'impulsions (12) et le moyen d'entraînement (14) pour augmenter le signal d'impulsion venant du moyen générateur d'impulsions (12).

8. Un jouet mobile comprenant:
un corps de jouet mobile (102);
des roues de roulement (106, 108) pour rouler le corps de jouet mobile (102) dans une direction requise;
un moteur à courant continu (110) ayant une borne positive et une borne négative pour faire tourner les roues de roulement (106, 108); et
un dispositif d'entraînement de moteur à courant continu (118) suivant toute revendication précédente.
